# EUROPÄISCHE PATENTANMELDUNG

(11) **EP 3 173 186 A1**
(43) Veröffentlichungstag der Anmeldung: **31.05.2017**
(21) Anmeldenummer: 16161434.2
(22) Anmeldetag: 21.03.2016
(51) Int. Cl.: B23Q 15/24, G05B 19/19, B65G 54/02

(54) **MASCHINENSTATION MIT EINEM LINEARANTRIEB, ANLAGE UND VERFAHREN ZUR BEARBEITUNG EINES BEARBEITUNGSGUTES**

(30) Priorität: 24.11.2015 EP 15196077; 24.11.2015 EP 15196041; 24.11.2015 EP 15196047
(71) Anmelder: Siemens Aktiengesellschaft, 80333 München (DE)
(72) Erfinder: Jäntsch, Michael, 91052 Erlangen (DE); Klaus, Maximilian, 70839 Gerlingen (DE); Rastätter, Gerhard, 71116 Gärtringen (DE); Sailer, Robin, 72589 Westerheim (DE); Spindler, Carsten, 07368 Remptendorf (DE); Szathmary, Csilla, 70499 Stuttgart (DE)

(57) **Zusammenfassung**

Zusammenfassend betrifft die Erfindung eine Maschinenstation (MS1, MS2), eine Anlage (A) und ein Verfahren zur Bearbeitung eines Bearbeitungsgutes (WS). Die Maschinenstation (MS1, MS2) ist mit einem Linearantrieb (LA) gekoppelt. Die Anlage weist eine Mehrzahl von Maschinestationen (MS1, MS2) und einen Linearantrieb (LA) auf. Zur Steuerung der Maschinenstation (MS1, MS2) dient vorteilhaft eine einzelne Bewegungssteuerung (BS), wobei die Bewegungssteuerung (BS) ein Numerical Control Modul (NC) Steuerung aufweist. Durch die Kombination der Maschinenstation (MS1, MS2) und des Linearantriebs (LA) können die Bearbeitungsgüter (WS) vereinfacht in die Maschinenstation (MS1, MS2) eingeführt werden und dort ohne weitere Arbeitsschritte gleich der Bearbeitung zugeführt werden. Weiter kann die Positionierung des Bearbeitungsgutes (WS) mit dem Linearantrieb (LA) in eine erste Richtung (x) bewegt werden und das Bearbeitungsmittel (WZ) durch die mit Hilfe der Maschinenstation (MS1, MS2) in die anderen Raumrichtungen (y, z) und/oder Ausrichtungen (a, b). Durch den Einsatz einer gemeinsamen Bewegungssteuerung (BS) für die zumindest eine Maschinenstation (MS1, MS2) und den Linearantrieb (LA) kann die Programmierung eines Bewegungsablaufs stark vereinfacht werden.

## Beschreibung

Die Erfindung betrifft eine Maschinenstation, eine Anlage und ein Verfahren zur Bearbeitung eines Bearbeitungsgutes.

Im Rahmen einer automatisierten Fertigung von Bearbeitungsgütern, insbesondere Werkstücken in einer Werkzeugmaschine, erfolgt die Bearbeitung der Bearbeitungsgüter in einer Reihe von Maschinenstation. Bisher werden die Bearbeitungsgüter händisch in die Maschinenstationen eingebracht und nach Bearbeitung händisch wieder aus der Maschinenstation entnommen.

In einer Weiterentwicklung werden die Bearbeitungsgüter von einer Maschinenstation zur nächsten Maschinenstation mit Hilfe eines konventionellen Transportmittels, wie einem Förderband oder eines Rundtisches bewegt. Weiter sind Maschinenstationen, insbesondere Werkzeugmaschinen bekannt, bei denen die Bearbeitung eines (Bearbeitungs-) Gutes oder Werkstückes mit Hilfe eines Linearmotors erfolgt.

Nachteilhaft am bisherigen Stand der Technik ist, dass die Bearbeitung und der Transfer von Bearbeitungsgütern von einer Maschinenstation zur nächsten Maschinenstation aufwändig ist.

Daher ist es Aufgabe der Erfindung, die Bearbeitung von Bearbeitungsgütern insbesondere mit einer Mehrzahl von Maschinenstationen zu vereinfachen.

Die Aufgabe wird mit Hilfe einer Maschinenstation, insbesondere einer Werkzeugmaschine, gelöst, wobei die Maschinenstation ein Bearbeitungsmittel und einen Linearantrieb aufweist, wobei der Linearantrieb zumindest einen Läufer aufweist, wobei der Läufer zur Positionierung des Bearbeitungsgutes ausgebildet ist, wobei der Linearantrieb zum Transport des Bearbeitungsgutes in die Maschinenstation hinein und/oder aus der Maschinenstation heraus vorgesehen ist, wobei der Linearantrieb zur Positionierung des Bearbeitungsgutes in eine erste Richtung vorgesehen ist, wobei das Bearbeitungsmittel in zumindest eine weitere Richtung beweglich ist, wobei das Bearbeitungsmittel zur Bearbeitung des Bearbeitungsgutes ausgebildet ist.

Die Aufgabe wird weiter durch eine Anlage gemäß dem Anspruch 10 gelöst. Die Anlage weist einen Linearantrieb und eine Mehrzahl von Maschinenstationen auf, wobei der Linearantrieb zur Überführung des Bearbeitungsgutes von der einen Maschinenstation in eine andere Maschinenstation vorgesehen ist.

Die Aufgabe wird weiter durch ein Verfahren zur Bearbeitung eines Bearbeitungsgutes gemäß Anspruch 12 gelöst.

Unter Maschinenstationen werden insbesondere die Bearbeitungsabschnitte einer Werkzeugmaschine verstanden. Unter einer Anlage kann eine Kombination von einer Werkzeugmaschine mit einer weiteren Bearbeitungsmaschine oder einer weiteren Werkzeugmaschine verstanden sein.

Bei dem Verfahren zur Bearbeitung eines Bearbeitungsgutes mit einem Bearbeitungsmittel, insbesondere mittels der vorgeschlagenen Maschinenstation oder der vorgeschlagenen Anlage, wird das Bearbeitungsmittel oder das Bearbeitungsgut mit einem Linearantrieb in eine erste Richtung positioniert, wobei das Bearbeitungsmittel oder das Bearbeitungsgut in zumindest eine weitere Richtung oder Ausrichtung durch eine Positioniereinrichtung erfolgt.

Vorteilhafte Ausgestaltungen und Weiterbildungen der oben genannten Gegenstände sind Gegenstand der abhängigen Ansprüche.

Der Linearantrieb weist Segmente auf, wobei die Segmente nebeneinander angeordnet sind, so dass ein Läufer auf den Segmenten und von einem Segment auf ein weiteres Segment transferiert werden kann. Bei den Segmenten handelt es sich vorteilhaft um Statoren von Linearmotoren und bei den Läufern handelt es sich vorzugsweise um Sekundärteile oder Läufer von Linearmotoren. Die Läufer weisen vorzugsweise eine Befestigungseinheit auf, wobei die Befestigungseinheit jeweils zur Befestigung des Bearbeitungsgutes oder zur Befestigung des Bearbeitungsmittels vorgesehen ist.

Der Linearantrieb dient zur Positionierung der Läufer und somit zur Positionierung der Bearbeitungsgüter und/oder der Bearbeitungsmittel in der Maschinenstation.

Der Linearantrieb eignet sich weiter zur Überführung der Läufer und damit zur Überführung der Bearbeitungsgüter von einer Maschinenstation zur nächsten Maschinenstation. Eine Bearbeitung des Bearbeitungsgutes mit Hilfe des Bearbeitungsmittels erfolgt in einer Maschinenstation, wobei nach Beendigung der Bearbeitung in der einen Maschinenstation das Bearbeitungsgut mit Hilfe des Läufers auf dem Linearantrieb in die weitere Maschinenstation überführt wird. In der weiteren Maschinenstation erfolgt eine weitere Bearbeitung des Bearbeitungsgutes mit einem weiteren Bearbeitungsmittel.

Bei dem Verfahren zur Bearbeitung eines Bearbeitungsgutes mit dem Bearbeitungsmittel erfolgt sowohl die Überführung des Bearbeitungsgutes mit Hilfe der Läufer auf dem Linearantrieb von einer Maschinenstation zu einer weiteren Maschinenstation. Der Linearantrieb dient auch zur Positionierung der Läufer und somit der Bearbeitungsgüter in der Maschinenstation, wobei eine Bearbeitung des Bearbeitungsgutes erfolgen kann, ohne dass die Bearbeitungsgüter von dem Läufer des Linearantriebs getrennt werden müssen. So ist ein besonders einfacher Transfer von Bearbeitungsgütern von einer Maschinenstation zu einer weiteren Maschinenstation möglich.

In einer vorteilhaften Ausgestaltung der Maschinenstation ist der Linearantrieb zur Positionierung des Bearbeitungsmittels anstelle des Bearbeitungsgutes in einer ersten Richtung vorgesehen. Mit Hilfe des Linearantriebs lassen sich sowohl das Bearbeitungsmittel als auch das Bearbeitungsgut in der Maschinenstation positionieren. Weiter vorteilhaft kann auch ein Bearbeitungsmittel von einer Maschinenstation zu einer anderen Maschinenstation überführt werden. Insbesondere in einer Kombination, in der sowohl die Bearbeitungsgüter als auch die Bearbeitungsmittel von einer Maschinenstation zu einer weiteren Maschinenstation, jeweils mit Hilfe eines hierfür vorgesehenen Linearantriebs, kann die Bearbeitung der Bearbeitungsgüter besonders effizient erfolgen.

Insbesondere bei einer Drehmaschine als Maschinenstation kann der Drehmeißel mit Hilfe des Linearantriebs positioniert werden. Bei diesem Anwendungsbeispiel ist das Bearbeitungsgut rotierend und wird mit dem Bearbeitungsmittel spanabhebend bearbeitet.

In einer weiteren vorteilhaften Ausgestaltung der Maschinenstation ist eine Bewegungssteuerung zur Steuerung oder Regelung der Bewegung des Bearbeitungsmittels und zur Steuerung oder Regelung der Bewegung des zumindest einen Läufers des Linearantriebs vorgesehen.

Eine Bewegungssteuerung dient zur Steuerung oder zur Regelung der Bewegung des Bearbeitungsmittels in der Maschinenstation. Weiter dient die Bewegungssteuerung zur Steuerung und/oder zur Regelung der Position des Läufers oder der Läufer auf dem Linearantrieb. Vorteilhaft erfolgt somit die Steuerung und/oder Regelung einer Maschinenstation oder einer Mehrzahl von Maschinenstationen und des Linearantriebs mit einer gemeinsamen Bewegungssteuerung. Die Bewegungssteuerung dient somit zur Positionierung der Läufer und somit zur Positionierung der Bearbeitungsgüter bzw. der Bearbeitungsmittel in der Maschinenstation und zur Überführung der Läufer und damit der Bearbeitungsgüter bzw. der Bearbeitungsmittel von einer Maschinenstation zu einer anderen Maschinenstation.

Bei einer weiteren vorteilhaften Ausgestaltung der Maschinenstation ist die Bewegungssteuerung zur Steuerung und/oder zur Regelung der Bewegung des Bearbeitungsgut oder des Bearbeitungsmittels in eine erste Richtung mit Hilfe des Linearantriebs vorgesehen, wobei die Bewegungssteuerung zur Steuerung oder Regelung der Bewegung des Bearbeitungsgutes oder des Bearbeitungsmittels vorgesehen ist.

In dieser vorteilhaften Ausgestaltung der Maschinenstation wird das Bearbeitungsgut in eine erste Richtung positioniert, wobei das Bearbeitungsmittel in den anderen Bewegungsrichtungen positioniert wird. Beispielsweise wird das Bearbeitungsgut in die x-Richtung bewegt, wobei das Bearbeitungsmittel in die y- und die z-Richtung bewegt wird, wobei die x-, y- und z-Richtung jeweils senkrecht aufeinander stehen. Somit kann jede Position im Verhältnis von dem Bearbeitungsgut und dem Bearbeitungsmittel realisiert werden.

Weiter ist es möglich, dass das Bearbeitungsmittel (sowie das Bearbeitungsgut) zusätzlich zur Positionierung in zwei Raumrichtungen ausrichtbar ist. Durch die Positionierung und die Ausrichtung des Bearbeitungsmittels in Bezug zum Bearbeitungsgut ist eine sogenannte Fünf-Achsen-Bearbeitung des Bearbeitungsgutes in der Maschinenstation möglich.

In einer weiteren vorteilhaften Ausgestaltung der Maschinenstation ist die Bewegungssteuerung als Numerical-Control (NC)-Steuerung ausgebildet oder die Steuereinrichtung weist ein Numerical-Control-Modul (NC-Modul) auf.

NC-Steuerungen weisen eine besondere hohe Genauigkeit zur Positionierung eines Bearbeitungsgutes oder eines Bearbeitungsmittels auf. NC-Steuerungen werden vorzugsweise in Werkzeugmaschinen eingesetzt. Insbesondere die Steuerung des Linearantriebs mit Hilfe einer NC-Steuerung eröffnet die Bearbeitung eines Bearbeitungsgutes mit Hilfe eines Linearantriebs, wobei der Linearantrieb das Bearbeitungsgut und/oder das Bearbeitungsmittel genau positionieren kann. Weiter ist mit der vorstehend aufgeführten Ausführung eine besondere einfache Steuerung der Maschinenstation möglich. Eine aufwändige Abstimmung oder Kommunikation zwischen einzelnen Steuereinrichtungen für einen Linearantrieb einerseits und für eine Maschinenstation andererseits entfällt daher. Somit ist auch die Erstellung von NC-Programmen (Ablaufprogrammen) deutlich vereinfacht.

Durch die NC-Steuerung kann das Bearbeitungsgut und/oder das Bearbeitungsmittel sehr schnell und genau positioniert werden. Weiter kann eine handelsübliche Bewegungssteuerung mit NC-Modul, beispielhaft ein Modell SINUMERIK der Siemens AG Verwendung finden.

Eine Bewegungssteuerung ist vorteilhaft als Computerprogrammprodukt ausgeführt, wobei das Computerprogrammprodukt ein NC-Modul aufweist, das zur Positionierung des Läufers in der Maschinenstation und/oder zur Positionierung des Bearbeitungsmittels ausgebildet ist. Das Computerprogrammprodukt ist auf einer Recheneinheit installiert und wird auf der Recheneinheit ausgeführt. Die Recheneinheit kann durch eine rechnerbasierte Steuereinrichtung oder durch einen Industrie-PC ausgebildet sein. Besonders vorteilhaft ist die Recheneinheit in eine herkömmliche NC-Steuerung integriert.

In einer weiteren vorteilhaften Ausgestaltung der Maschinenstation weist die Maschinenstation ein Messsystem auf, wobei das Messsystem zur Erfassung der Position des Läufers des Linearantriebes ausgebildet ist, wobei das Messsystem insbesondere eine Maßverkörperung und einen Sensor umfasst, wobei das Messsystem zur Bereitstellung von Positionssignalen an die Bewegungssteuerung vorgesehen ist.

Vorteilhaft ist die Maßverkörperung an dem Läufer positioniert, wobei der Sensor zur Bestimmung der Position des Läufers mit Hilfe der Maßverkörperung am Segment des Linearantriebs befestigt ist. Allerdings können auch alternative Messsysteme eingesetzt werden, welche ohne eine Maßverkörperung und einen Sensor auskommen, solange das Messsystem die Position des Läufers erfassen und übermitteln kann. Das Messsystem kann als offenes Messsystem ausgestaltet sein. Unter einem offenen Messsystem wird ein Messsystem verstanden, welches durch Einführung des Läufers in die Maschinenstation aktiviert wird, wobei während der Bearbeitung des Bearbeitungsgutes eine absolute Position des Läufers auf dem Linearantrieb ermittelt wird. Nach Beendigung der Bearbeitung oder beim Verlassen des Läufers auf der Maschinenstation wird das Messsystem wieder deaktiviert. Durch Einführung eines neuen Läufers wird das Messsystem wieder aktiviert. Die mit dem Messsystem erfasste Position des Läufers auf dem Linearantrieb dient zur Regelung der Position des Läufers auf dem Linearantrieb.

Vorteilhaft ist ein Messsystem mit einem Sensor und einer Maßverkörperung so genau, dass eine besonders genaue Bearbeitung des Bearbeitungsgutes möglich ist. Das Messsystem kann auch in ein bereits vorhandenes Messsystem einer Maschinenstation integriert werden. Der Sensor kann auch als bildgebender Sensor (Kamera) ausgebildet sein. Hierbei gilt die Maßverkörperung als Maßstab, um so eine vereinfachte Messung aus dem aufgenommenen Bild zu generieren.

Bei einer Regelung der Position des Läufers des Linearantriebs kann das Messsystem die Regelung unterstützen. Vorteilhaft kann das Messsystem die Regelung auch ersetzen, wobei eine bereits vorhandene Positionsregelung durch das Messsystem ersetzt wird oder anstelle eines Linearantrieb-eigenen Positionssensors die Position des Läufers für die Regelung bereitstellt.

In einer weiteren vorteilhaften Ausgestaltung der Maschinenstation ist das Bearbeitungsmittel in zumindest eine Richtung ausrichtbar.

Insbesondere mit Hilfe einer weiteren Positionier- oder Ausrichteeinrichtung kann das Bearbeitungsmittel sowohl in weitere Raumrichtungen (y-Richtung, z-Richtung) positioniert werden und/oder in unterschiedliche Raumwinkel ausgerichtet werden. Eine Ausrichtung in Raumachsen ist sowohl für das Bearbeitungsmittel als auch für das Bearbeitungsgut denkbar. Bevorzugt wird jedoch das Bearbeitungsmittel ausgerichtet, falls das Bearbeitungsgut auf einem Läufer des Linearantriebs befestigt ist. Durch diese Ausgestaltung ist eine Bearbeitung des Bearbeitungsgutes in einem Fünf-Achsen-Modus möglich.

In einer weiteren vorteilhaften Ausgestaltung der Maschinenstation weist der Linearantrieb zumindest ein Segment auf, wobei das Segment zur Positionierung des Läufers vorgesehen ist und wobei die Bearbeitung des Bearbeitungsgutes im Bereich des Segments erfolgt.

Das Segment in der Maschinenstation ist vorteilhaft als lang ausgedehntes Segment ausgebildet, wobei das lang ausgedehnte Segment auch als Langstator eines Linearantriebs bezeichnet wird. Vorteilhaft findet die Bearbeitung des Bearbeitungsgutes in einem Bereich statt, der von einem Segment des Linearantriebs abgedeckt wird. Durch die Bearbeitung auf einem Segment ist ein Transfer des Läufers von einem Segment auf ein weiteres Segment während der Bearbeitung nicht notwendig. Somit ist eine mögliche Ungenauigkeit in der Positionierung des Läufers während der Bearbeitungsphase ausgeschlossen.

In einer vorteilhaften Ausgestaltung der Anlage weist der Linearantrieb zwischen den Maschinenstationen einen Zwischenbereich auf, wobei der Zwischenbereich insbesondere als Förderband ausgestaltet ist. Durch die Ausgestaltung des Linearantriebs mit einem Förderband in einem Bereich, in dem eine Positionierung des Läufers mit einer geringeren Genauigkeit erfolgen kann, kann ein besonders einfach und günstig herzustellender Linearantrieb verwendet werden, wodurch die Kosten der Anlage reduziert werden können. Der Zwischenbereich kann weiter zur Speicherung von Läufern dienen, wobei die Läufer Bearbeitungsgüter oder Bearbeitungsmittel positionieren und in dem Zwischenbereich verharren, bis die nachfolgende Maschinenstation für den Läufer bzw. das Bearbeitungsgut aufnahmebereit ist. Der Zwischenbereich kann ebenso durch Segmente ausgestaltet sein, wobei die Segmente zur Überführung der Läufer von einer Maschinenstation zu einer weiteren Maschinenstation vorgesehen sind. Bei Verwendung von Segmenten kann eine geregelte Bewegung der Läufer auch zwischen den Maschinenstationen erfolgen. Durch den Wegfall von Transferbereichen ist eine besonders einfache Ausgestaltung der Programmierung eines Bewegungsablaufs der Läufer auf dem Linearantrieb der Anlage möglich.

In einer vorteilhaften Ausgestaltung des Verfahrens wird ein Messsystem durch Einbringen eines Läufers in die Maschinenstation aktiviert, wobei das aktivierte Messsystem die Position des Läufers erfasst, wobei die Position des Läufers der Bewegungssteuerung zur Verfügung gestellt wird, wobei nach Ausgabe des Läufers aus der Maschinenstation das Messsystem deaktiviert wird.

Während der Aktivierung liefert das Messsystem vorteilhaft absolute Positionsdaten des Läufers, wobei die absoluten Positionsdaten des Läufers eine besonders genaue Positionierung des Läufers, und damit des Bearbeitungsgutes oder des Bearbeitungsmittels, erlauben.

In einer weiteren vorteilhaften Ausgestaltung des Verfahrens erfolgt die Überführung einer Mehrzahl von Bearbeitungsgütern mit dem Linearantrieb in einem konventionellen Transfer oder einem dynamischen Transfer von einer Maschinenstation zur nächsten Maschinenstation.

Unter einem konventionellen Transfer wird verstanden, dass das jeweilige Bearbeitungsgut von einer Maschinenstation zur nächsten Maschinenstation überführt wird. Dies erfolgt für alle Läufer zu einer ähnlichen Zeit. Ein solches Verfahren ist besonders vorteilhaft, falls Bearbeitungsvorgänge von Bearbeitungsgütern in den einzelnen Maschinenstationen eine ähnliche Zeit bedürfen.

Vorteilhafter ist bei einem Einsatz des Linearantriebs ein dynamischer Transfer von Läufern durch die Maschinenstation. Vorteilhaft kann ein Läufer des Lineartransports nach Durchlauf einer Maschinenstation eine erste oder eine zweite Maschinenstation mit einem Bearbeitungsgut oder einem Bearbeitungsmittel beliefern. Gegebenenfalls können auch mehrere Bearbeitungsgüter gleichzeitig in einer Maschinenstation bearbeitet werden.

Eine Maschinenstation kann hierfür bei einer Kapazität für eine Bearbeitung bzw. Bereitsein zur Aufnahme eines Läufers ein Signal an die Bewegungssteuerung aussenden.

Es können auch mehrere Maschinenstationen für langanhaltende Bearbeitungsvorgänge vorgesehen sein, wobei die langanhaltenden Bearbeitungsvorgänge in den jeweiligen Maschinenstationen parallel ablaufen.

Zur Überführung der Läufer von einer Maschinenstation kann ein Förderband und/oder der Linearantrieb mit Segmenten dienen. Das Förderband kann durch Transferbereiche mit den Segmenten in Verbindung stehen. Transferbereiche dienen zur Übergabe von Läufern von dem Förderband auf ein Segment und umgekehrt.

Im Folgenden wird die Erfindung anhand von Figuren näher beschrieben und erläutert. Es zeigen:
- FIG 1: eine Maschinenstation mit Linearantrieb,
- FIG 2: eine Anlage mit Linearantrieb,
- FIG 3: eine weitere Anlage mit Linearantrieb,
- FIG 4: eine weitere Ausgestaltung der Anlage,
- FIG 5: eine Anlage mit einem Förderband sowie
- FIG 6: ein Schema der Steuerung und/oder Regelung.

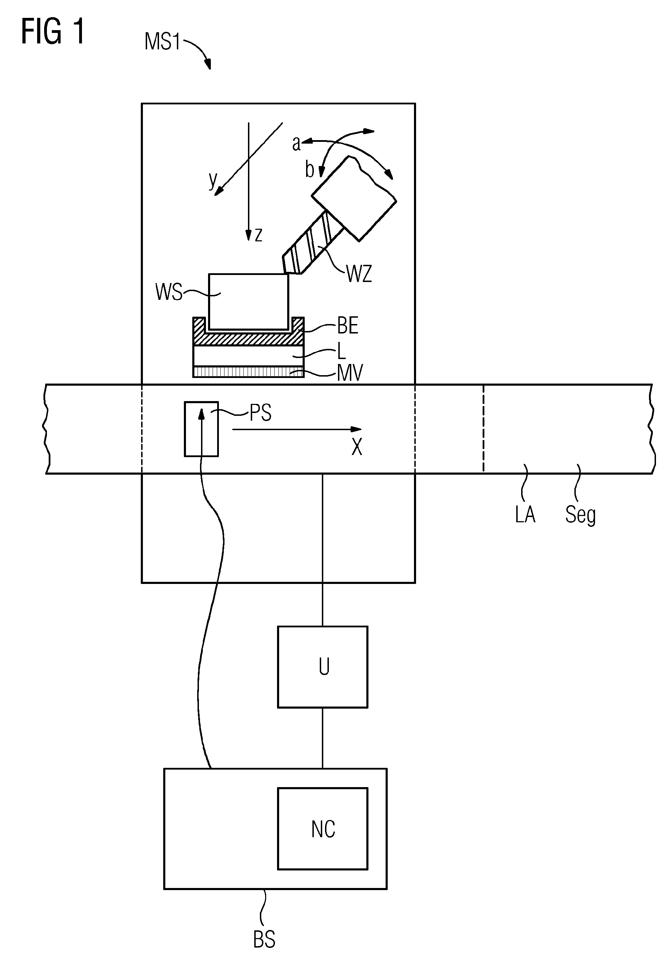

FIG 1 zeigt eine Maschinenstation MS1 mit einem Linearantrieb LA. Der Linearantrieb LA weist Segmente Seg und einen Läufer L auf. Der Läufer L dient zur Positionierung des Bearbeitungsgutes WS, wobei das Bearbeitungsgut WS mit einer Befestigungseinrichtung BE auf dem Läufer L positioniert wird. Unter einem Bearbeitungsgut WS kann ein Werkstück verstanden werden. Die Befestigungseinrichtung BE ist auf dem Läufer L befestigt. Das Bearbeitungsgut WS wird von dem Bearbeitungsmittel WZ bearbeitet. Das Bearbeitungsgut WS wird mit Hilfe des Linearantriebs LA auf dem Segment Seg in eine erste Richtung (x-Richtung) bewegt und in der x-Richtung positioniert. Die Bearbeitung des Bearbeitungsgutes WS findet in der Maschinenstation MS1 statt. Die Maschinenstation MS1 weist hierbei das Bearbeitungsmittel WZ auf, wobei das Bearbeitungsmittel WZ in weitere Raumrichtungen (y-Richtung, z-Richtung) verschiebbar ist und in Raumrichtungen a, b ausgerichtet werden kann. Der Läufer L weist eine Maßverkörperung MV auf. Ein Sensor PS ermittelt mit Hilfe der Maßverkörperung MV die Position des Läufers L in die erste Richtung (x-Richung). Mit Hilfe des Sensors PS und der Maßverkörperung MV ist eine Bestimmung der absoluten Position des Läufers L und somit des Bearbeitungsgutes WS in die erste Richtung (x-Richtung) möglich.

Der Sensor PS und die Maßverkörperung MV bilden das Messsystem, wobei das Messsystem zur Erfassung der Position des Bearbeitungsgutes ausgebildet ist. Das Messsystem, insbesondere der Sensor PS, überträgt die erfasste Position des Läufers an die Bewegungssteuerung BS. Denkbar ist auch der Einsatz eines alternativen Messsystems, welches ohne eine Maßverkörperung MV und einen Sensor PS auskommt, solange das Messsystem die Position des Läufers erfasst und übermittelt werden kann. Die Bewegungssteuerung BS weist ein (Numerical-Control) NC-Modul NC auf. Die Bewegungssteuerung BS kann auch als NC-Steuerung ausgebildet sein. Die Bewegungssteuerung BS ist mit einer Steuereinheit U verbunden, wobei die Steuereinheit U zur Stromversorgung des Segments Seg und somit zur Bewegung des Läufers L auf dem Segment Seg vorgesehen ist. Die Bewegungssteuerung BS steuert also mit Hilfe der Steuereinrichtung U die Position des Läufers L. Mit Hilfe des Messsystems wird die Position des Läufers L erfasst und an die Bewegungssteuerung BS übertragen. Somit ist ein Regelkreislauf zur Regelung der Position des Läufers L auf dem Segment Seg des Linearantriebs LA geschlossen.

Der Linearantrieb LA weist ggf. mehrere Segmente Seg auf, wobei die Mehrzahl der Segmente Seg durch die gestrichelte Abtrennung der Segmente Seg angedeutet ist. Die Maschinenstation MS1 ist hier vorteilhaft als Teil einer Werkzeugmaschine ausgebildet, wobei das Bearbeitungsmittel WS als spanabhebendes Werkzeug, ausgebildet ist. Weiter ist das Bearbeitungsgut WS als Werkstück ausgebildet.

Der Läufer L wird auf dem Segment Seg in den Erfassungsbereich des Sensors PS überführt. Die Überführung erfolgt beim Eingang des Läufers L in die Maschinenstation MS1. Der Sensor PS wird daraufhin initialisiert und erfasst die Position des Läufers L anhand der Maßverkörperung MV. Hierdurch ist eine Erfassung der Position, insbesondere der absoluten Position, des Läufers L auf dem Segment Seg möglich. Während der Bearbeitung des Bearbeitungsgutes WS dient das Messsystem zur fortwährenden Ermittlung der Position des Läufers L und somit des Bearbeitungsgutes WS. Die absolute Position dient als Eingangsgröße für die Bewegungssteuerung BS. Die Bewegungssteuerung BS steuert und/oder regelt anhand der Position des Läufers die Bewegung des Läufers L oder die Positionierung des Läufers L auf dem Segment Seg. Nach der Bearbeitung des Bearbeitungsgutes WS wird der Läufer L mit dem Bearbeitungsgut WS wieder aus der Maschinenstation MS1 entfernt. Nach Verlassen des Läufers L und somit der Massverkörperung MV aus dem Erfassungsbereich den Sensors PS endet die Erfassung der Position des Läufers durch das Messsystem.

Die Position des Läufers L kann zusätzlich mit weiteren Mitteln, wie einem Magnetostriktions-Sensor, ermittelt werden. Vorteilhaft an dem offenen Messsystem ist, dass der Läufers L den Messbereich verlassen kann. Die Bewegungssteuerung BS ist optional über eine Steuereinheit U mit dem Segment Seg bzw. dem Linearantrieb LA verbunden. Die Steuereinheit U dient vorteilhaft zur Strom- und/oder Spannungsversorgung des Segments Seg. Das Segment Seg oder die Segmente Seg sind als Linearmotorstatoren oder Primärteile eines Linearmotors ausgebildet.

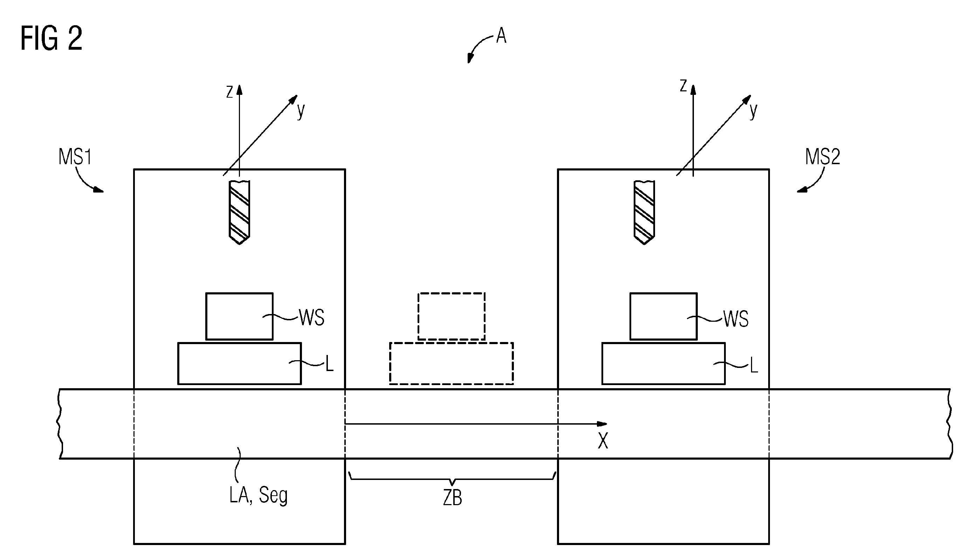

FIG 2 zeigt eine Anlage A, wobei die Anlage A zwei Maschinenstationen MS1, MS2 aufweist, wobei die Maschinenstationen MS1, MS2 beabstandet angeordnet sind. Zur Verbindung der Maschinenstationen MS1, MS2 dient ein Linearantrieb LA. Der Linearantrieb LA weist einen Zwischenbereich ZB zwischen den Maschinenstationen MS1, MS2 auf. In den Maschinenstationen MS1, MS2 findet die Bearbeitung des Bearbeitungsgutes WS mit dem Bearbeitungsmittel WZ statt. In einer Maschinenstation MS1, MS2 können auch mehrere Bearbeitungsgüter WS gleichzeitig bearbeitet werden. Nach einem Bearbeitungsschritt des Bearbeitungsgutes WS in der ersten Maschinenstation MS1 kann das Bearbeitungsgut auf einem Läufer L auch in den Zwischenbereich ZB überführt werden und aus dem Zwischenbereich ZB in die zweite Maschinenstation MS2 überführt werden. Ein solcher dynamischer Transfer der Läufer L mit den Bearbeitungsgütern WS kann dann erfolgen, wenn eine Maschinenstation MS1, MS2 zur Bearbeitung des Bearbeitungsgutes WS länger braucht als die andere Maschinenstation. So kann das Bearbeitungsgut WS auf dem Läufer L im Zwischenbereich ZB gehalten werden bis die vorgesehene Maschinenstation MS1, MS2 wieder Kapazitäten zur Aufnahme des Läufers L und des Bearbeitungsgutes WS aufweist. Auch bei der hier gezeigten Anlage wird das Bearbeitungsgut WS in eine erste Richtung (x-Richtung) bewegt, während das Bearbeitungsmittel WZ in die jeweils anderen Raumrichtungen (y-Richtung, z-Richtung) positioniert werden.

Vorteilhaft werden die Bearbeitungsschritte in den einzelnen Maschinenstationen MS1, MS2 so ausgestaltet, dass die Zeiten für die Bearbeitung der Bearbeitungsgüter etwa übereinstimmen. Dann bedarf es keinem dynamischen Transfer von Bearbeitungsgütern in die entsprechenden Maschinenstationen MS1, MS2, sondern es kann ein gewöhnlicher Transfer der Bearbeitungsgüter in die Maschinenstationen MS1, MS2 erfolgen, so dass ein Läufer L mit einem Bearbeitungsgut WS jeweils sukzessiv von einer Bearbeitungsstation in die nächste Bearbeitungsstation unmittelbar überführt wird.

Es ist auch denkbar, dass eine Maschinenstation MS1, MS2 mehrere Läufer L und somit Bearbeitungsgüter WS auf einmal aufnimmt. Somit kann ein verbesserter dynamischer Transfer von Läufern L bzw. Bearbeitungsgüter WS erfolgen.

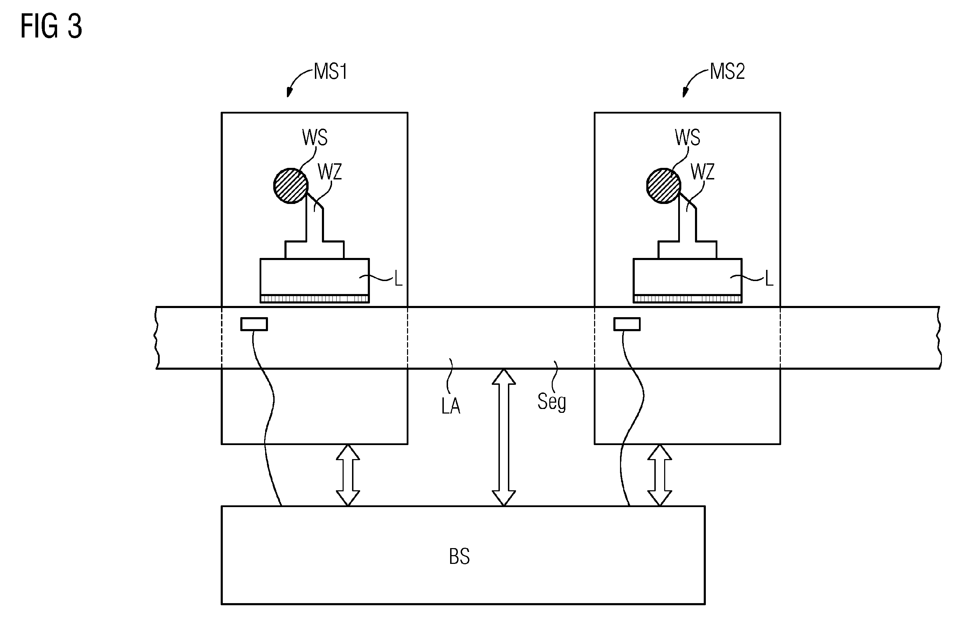

FIG 3 zeigt eine weitere Ausgestaltung der Anlage A. Durch die ausgeprägten Doppelpfeile von der Bewegungssteuerung BS zur ersten Maschinenstation MS1, zur zweiten Maschinenstation MS2 und zum Linearantrieb LA ist dargestellt, dass die Bewegungssteuerung BS sowohl zur Steuerung der Bewegung in den Maschinenstationen MS1, MS2 vorgesehen ist als auch zur Steuerung bzw. zur Regelung der Position der Läufer L auf dem Linearantrieb LA. Weiter werden in der in FIG 3 gezeigten Anlage A nicht das Bearbeitungsgut WS, sondern das Bearbeitungsmittel WZ durch den Läufer L und den Linearantrieb LA positioniert. Die Positionierung des Läufers L erfolgt in eine erste Richtung (x-Richtung). Die Bearbeitungsgüter WS sind mit Hilfe von Antrieben der jeweiligen Maschinenstation MS1, MS2 bewegbar bzw. ausrichtbar. Die Bearbeitungsgüter WS sind hierbei in der jeweiligen Maschinenstation MS1, MS2 integriert. Durch eine solche Anlage A kann beispielsweise eine Mehrzahl von Drehmaschinen ausgeführt sein, wobei die Drehmaschinen unterschiedliche Bearbeitungsmittel WZ, insbesondere Drehmeißel, aufweisen, die von einer Maschinenstation MS1 in eine weitere Maschinenstation MS2 überführt werden. Hierbei wird das Bearbeitungsgut von der jeweiligen Maschinenstation MS1, MS2 rotierend bewegt.

Durch die hier gezeigte schematische Ausgestaltung einer Anlage können eine Mehrzahl von Bearbeitungsmitteln WZ in einzelnen Maschinenstationen MS1, MS2 analog eines Werkzeugmagazins zugeführt und/oder zu einer weiteren Maschinenstation transferiert werden. Die Bewegungssteuerung BS kann auch hier durch eine NC-Steuerung ersetzt sein oder ein NC-Modul aufweisen.

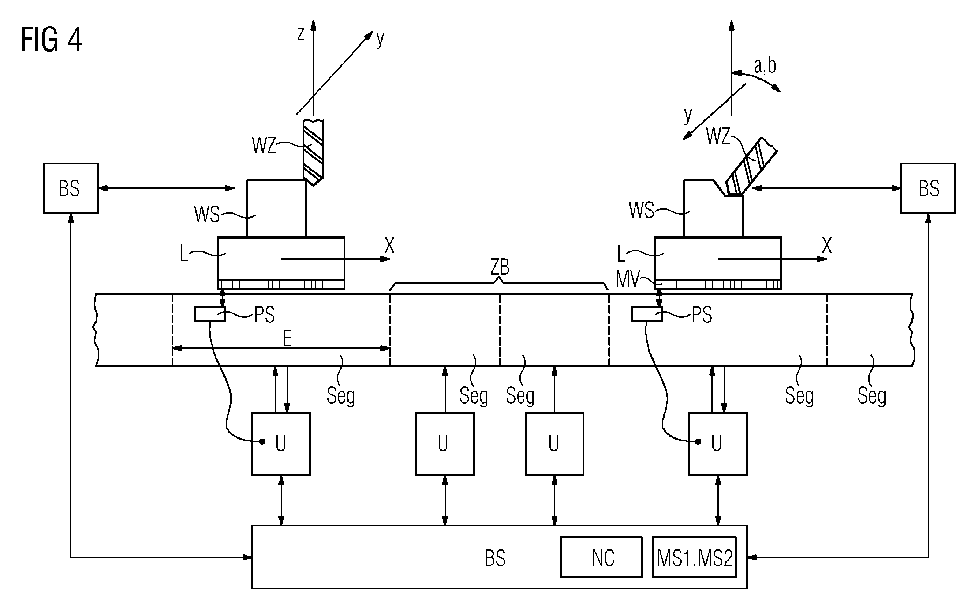

FIG 4 zeigt eine Konzeption einer Anlage A. Durch den Wegfall der Maschinenstationen MS1, MS2 soll verdeutlicht werden, dass die Maschinenstationen MS1, MS2 aus den FIG 1 bis 3 keine realen Gebilde sein müssen, sondern sich vorzugsweise auch durch einen Einflussbereich oder ein Segment Seg definieren können. Hierzu weist der Linearantrieb LA mehrere Bereiche, wie einen Einflussbereich E und einen Zwischenbereich ZB auf. Im Einflussbereich E wird die Position des Läufers L mit einem Messsystem ermittelt. Im Einflussbereich E erfolgt weiter eine Bearbeitung des Bearbeitungsgutes WS, wobei das Bearbeitungsgut auf dem Läufer L positioniert ist, dessen Position mit dem Messsystem, insbesondere mit dem Sensor PS erfasst wird. Zwischen den Einflussbereichen E befindet sich der Zwischenbereich ZB, wobei der Zwischenbereich vorteilhaft über kein Messsystem verfügt, weil im Zwischenbereich ZB eine hochgenaue Erfassung der Position des Läufers L nicht notwendig erscheint. Der Zwischenbereich ZB dient vielmehr dem Transfer des Läufers L von einem ersten Einflussbereich E in einen weiteren Einflussbereich E. Der Einflussbereich E ist vorteilhaft durch ein langes Segment Seg ausgebildet, wobei das Segment Seg im Einflussbereich durch einen einzigen Linearmotorstator ausgebildet ist.

Die einzelnen Segmente Seg werden jeweils über Steuereinheiten U gesteuert bzw. geregelt. Die Steuereinheiten U sind mit der Bewegungssteuerung BS verbunden, wobei die Bewegungssteuerung vorteilhaft ein NC-Modul und/oder ein Abbild der Maschinenstationen MS1, MS2 aufweist. Unter einem Abbild einer Maschinenstation kann ein Software-Abbild der Maschinenstation verstanden sein. Das Abbild kann zur verbesserten Kommunikation der Bewegungssteuerung BS mit der Maschinenstationen MS1, MS2 dienen. Die Abbilder der Maschinenstationen MS1, MS2 können auch durch Bewegungssteuerungen BS ergänzt oder ersetzt sein, wobei die Bewegungssteuerungen der entsprechenden Maschinenstation zugeordnet sind. Beispielsweise kann eine Bewegungssteuerung BS, die einer Maschinenstation MS1, MS2 oder einem Einflussbereich E zugeordnet ist, zur Steuerung der Antriebe zur Positionierung der jeweiligen Bearbeitungsmittel WZ vorgesehen sein. Diese müssen jedoch nicht als reale (Hardware-) Bewegungssteuerungen vorliegen, sondern können in eine Steuerung der jeweiligen Maschinenstation MS1, MS2 integriert sein. Dies wird mit den weiteren Bewegungsstationen BS angedeutet, die neben dem Bearbeitungsmittel WZ angeordnet sind. Der Informations- bzw. Signalfluss von einem Element zu einem weiteren Element ist durch die Pfeilrichtung dargestellt. So erhält beispielsweise die Steuereinheit U Angaben zur Position und/oder Geschwindigkeit des Läufers L oder über den Zustand des entsprechenden Segments Seg. Auch in der hier gezeigten Anlage A sind die Einflussbereiche E mit jeweils einem Messsystem ausgestattet.

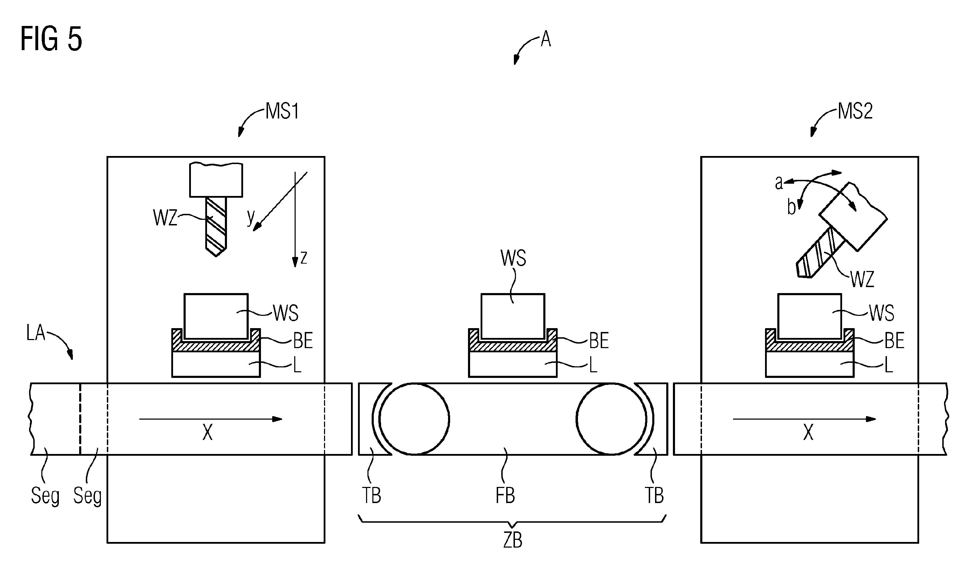

FIG 5 zeigt eine Anlage A mit einem Förderband FB. Analog zum Aufbau der vorangehenden Figuren ist die in FIG 5 gezeigte Anlage A der Zwischenbereich ZB durch ein Förderband FB ausgeführt. Das Förderband FB dient zur Überführung des Läufers L mit dem Bearbeitungsgut WS von der ersten Maschinenstation MS1 zur zweiten Maschinenstation MS2. An den Grenzen zwischen den Segmenten Seg der Maschinenstationen MS1, MS2 und dem Förderband FB befinden sich Transferbereiche TB. Die Transferbereiche TB dienen zur Überführung des Läufers L von dem Segment Seg auf das Förderband FB und umgekehrt. Sowohl das Förderband FB als auch die Maschinenstationen MS1, MS2 und die Segmente Seg des Linearantriebs LA werden vorteilhaft sämtlich von einer Bewegungssteuerung BS gesteuert und/oder geregelt.

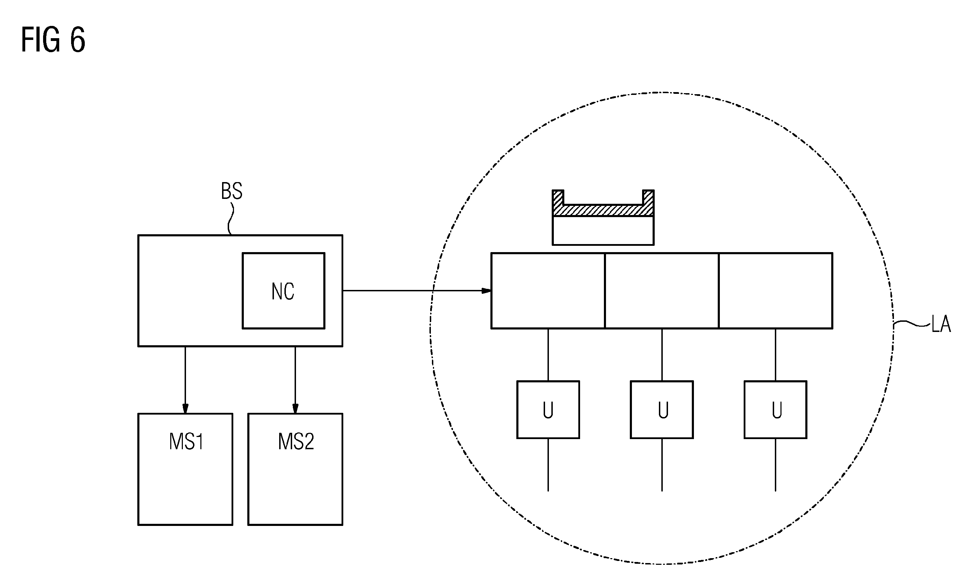

FIG 6 zeigt ein Schema der Steuerung und/oder Regelung der einzelnen Elemente durch die Bewegungssteuerung BS. Die Bewegungssteuerung BS dient in dieser Ausgestaltung zur Steuerung und/oder Regelung der Antriebe der Maschinenstationen MS1, MS2 und zur Steuerung und/oder Regelung der Position des Läufers L auf den Segmenten Seg des Linearantriebs LA. Hierdurch werden alle Bewegungen durch eine Bewegungssteuerung BS gesteuert und/oder geregelt. Eine aufwändige Kommunikation zwischen unterschiedlichen Bewegungssteuerungen BS entfällt somit. Vorteilhaft dient das NC-Modul auch zur Positionierung der Läufer des Linearantriebs LA.

Zusammenfassend betrifft die Erfindung eine Maschinenstation MS1, MS2, eine Anlage A und ein Verfahren zur Bearbeitung eines Bearbeitungsgutes WS. Die Maschinenstation MS1, MS2 ist mit einem Linearantrieb LA gekoppelt. Die Anlage weist eine Mehrzahl von Maschinestationen MS1, MS2 und einen Linearantrieb LA auf. Zur Steuerung der Maschinenstation MS1, MS2 dient vorteilhaft eine einzelne Bewegungssteuerung BS, wobei die Bewegungssteuerung BS ein Numerical Control Modul (NC) Steuerung aufweisen kann. Durch die Kombination der Maschinenstation MS1, MS2 und des Linearantriebs LA können die Bearbeitungsgüter WS vereinfacht in die Maschinenstation MS1, MS2 eingeführt werden und dort ohne weitere Arbeitsschritte gleich der Bearbeitung zugeführt werden. Weiter kann die Positionierung des Bearbeitungsgutes WS mit dem Linearantrieb LA in eine erste Richtung x bewegt werden und das Bearbeitungsmittel WZ durch die mit Hilfe der Maschinenstation MS1, MS2 in die anderen Raumrichtungen y, z und/oder Ausrichtungen a, b. Durch den Einsatz einer gemeinsamen Bewegungssteuerung BS für die zumindest eine Maschinenstation MS1, MS2 und den Linearantrieb LA kann die Programmierung eines Bewegungsablaufs stark vereinfacht werden.

## Patentansprüche

1. Maschinenstation (MS1, MS2), insbesondere Werkzeugmaschine, aufweisend ein Bearbeitungsmittel (WZ) und einen Linearantrieb, wobei der Linearantrieb (LA) zumindest einen Läufer (L) aufweist, wobei der Läufer (L) zur Positionierung eines Bearbeitungsgutes (WS) ausgebildet ist, wobei der Linearantrieb (LA) zum Transport des Bearbeitungsgutes (WS) in die Maschinenstation (MS1, MS2) hinein und/oder aus der Maschinenstation (MS1, MS2) heraus vorgesehen ist, wobei der Linearantrieb (LA) zur Positionierung des Bearbeitungsguts (WS) in eine erste Richtung (x) vorgesehen ist, wobei das Bearbeitungsmittel (WZ) in zumindest eine weitere Richtung (y, z, a, b) beweglich ist, wobei das Bearbeitungsmittel (WZ) zur Bearbeitung des Bearbeitungsgutes (WS) ausgebildet ist.

2. Maschinenstation (MS1, MS2) nach Anspruch 1, wobei der Linearantrieb (LA) zur Positionierung des Bearbeitungsmittels (WZ) anstelle des Bearbeitungsgutes (WS) in eine erste Richtung (x) vorgesehen ist.

3. Maschinenstation (MS1, MS2) nach Anspruch 1 oder 2, wobei eine Bewegungssteuerung (BS) zur Steuerung oder Regelung der Bewegung des Bearbeitungsmittels (WZ) und zur Steuerung oder Regelung der Bewegung des zumindest einen Läufers (L) des Linearantriebs (LA) vorgesehen ist.

4. Maschinenstation (MS1, MS2) nach einem der vorangehenden Ansprüche, wobei die Bewegungssteuerung (BS) zur Steuerung oder Regelung der Bewegung des Bearbeitungsgutes (WS) oder des Bearbeitungsmittels (WZ) in die erste Richtung (x) mit Hilfe des Linearantriebs (LA) vorgesehen ist und wobei die Bewegungssteuerung (BS) zur Steuerung oder Regelung der Bewegung des Bearbeitungsgutes (WS) oder des Bearbeitungsmittels (WZ) vorgesehen ist.

5. Maschinenstation (MS1, MS2) nach einem der vorangehenden Ansprüche, wobei die Bewegungssteuerung (BS) als Numerical-Control (NC) Steuerung ausgebildet ist oder ein Numerical-Control (NC) Modul aufweist.

6. Maschinenstation (MS1, MS2) nach einem der vorangehenden Ansprüche, aufweisend ein Messsystem, wobei das Messsystem zur Erfassung der Position des Läufers des Linearantriebs (LA) ausgebildet ist, wobei das Messsystem insbesondere eine Maßverkörperung (MV) und einen Sensor (PS) umfasst, wobei das Messsystem zur Bereitstellung von Positionssignalen an die Bewegungssteuerung (BS) vorgesehen ist.

7. Maschinenstation (MS1, MS2) nach einem der vorangehenden Ansprüche, wobei das Bearbeitungsmittel (WZ) in zumindest eine Richtung (a, b) ausrichtbar ist.

8. Maschinenstation (MS1, MS2) nach einem der vorangehenden Ansprüche, wobei der Linearantrieb (LA) zumindest ein Segment (Seg) aufweist, wobei das Segment (Seg) zur Positionierung des Läufers (L) vorgesehen ist, und wobei die Bearbeitung des Bearbeitungsgutes (WS) im Bereich des Segments (Seg) erfolgt.

9. Maschinenstation (MS1, MS2) nach einem der vorangehenden Ansprüche, wobei die Maschinenstation (MS1, MS2) als Werkzeugmaschine ausgebildet ist.

10. Anlage (A), aufweisend eine Mehrzahl von Maschinenstationen (MS1, MS2) gemäß einem der Ansprüche 1 bis 9, wobei der Linearantrieb (LA) zur Überführung des Bearbeitungsgutes (WS) von einer Maschinenstation (MS1) in eine andere Maschinenstation (MS2) vorgesehen ist.

11. Anlage (A) nach Anspruch 10, wobei der Linearantrieb (LA) zwischen den Maschinenstationen (MS1, MS2) einen Zwischenbereich (ZB), insbesondere ein Förderband (FB), aufweist. *(Zwischenbereich dient zur Zwischenspeicherung der Läufer)*

12. Verfahren zur Bearbeitung eines Bearbeitungsgutes (WS) mit einem Bearbeitungsmittel (WZ), insbesondere mittels einer Maschinenstation (MS1, MS2) gemäß einem der Ansprüche 1 bis 9 oder einer Anlage (A) gemäß Anspruch 10 oder 11, wobei das Bearbeitungsmittel (WZ) oder das Bearbeitungsgut (WS) mit einem Linearantrieb (LA) in eine erste Richtung (x) positioniert wird, wobei das Bearbeitungsmittel (WZ) oder das Bearbeitungsgut (WS) in zumindest eine weitere Richtung (y, z) oder Ausrichtung (a, b) durch eine Positioniereinrichtung erfolgt.

13. Verfahren nach Anspruch 12, wobei ein Messsystem durch Einbringen eines Läufers (L) in die Maschinenstation (MS1, MS2) aktiviert wird, wobei das aktivierte Messsystem die Position des Läufers (L) erfasst, wobei die Position des Läufers (L) der Bewegungssteuerung (BS) zur Verfügung gestellt wird, wobei nach Ausgabe des Läufers (L) aus der Maschinenstation (MS1, MS2) das Messsystem deaktiviert wird.

14. Verfahren nach einem der Ansprüche 12 oder 13, wobei die Überführung einer Mehrzahl von Bearbeitungsgütern (WS) mit dem Linearantrieb (LA) in einem konventionellem Transfer oder einem dynamischen Transfer von einer Maschinenstation (MS1) zur nächsten Maschinenstation (MS2) erfolgt.
